# EUROPÄISCHE PATENTANMELDUNG

(11) **EP 2 937 226 A1**
(43) Veröffentlichungstag der Anmeldung: **28.10.2015**
(21) Anmeldenummer: 15164594.2
(22) Anmeldetag: 22.04.2015
(51) Int. Cl.: B44C 3/02, B28B 11/00, B41M 5/00, B44C 5/04

(54) **NASSDRUCKVERFAHREN FÜR KERAMIKFLIESEN**

(30) Priorität: 22.04.2014 EP 14165429
(71) Anmelder: Steuler-Fliesen GmbH, 56203 Höhr-Grenzhausen (DE)
(72) Erfinder: Wieser, Paul, 71665 Vaihingen an der Enz (DE)
(74) Vertreter: Von Kreisler Selting Werner - Partnerschaft von Patentanwälten und Rechtsanwälten mbB

(57) **Zusammenfassung**

Verfahren zur Dekoration einer keramischen Fliese umfassend folgende Schritte:
- Bereitstellen eines keramischen Fliesenkörpers
- Auftragen einer wässrigen Glasur
- Aufbringen einer wässrigen Tinte enthaltend Farbpigmente auf die noch nicht getrocknete Glasur mittels Digitaldruck
- Brennen zu einer keramischen Fliese.

## Beschreibung

Die vorliegende Erfindung betrifft ein Verfahren zur Dekoration einer keramischen Fliese.

Keramikfliesen sind als Wandbekleidung oder als Bodenbeläge im Innen- und Außenbereich weit verbreitet. Die Herstellung von Keramikfliesen ist seit Jahrtausenden bekannt. Schon von Anfang an war die Dekoration der Fliese wesentlich für ihren Wert.

Im Rahmen der industriellen Revolution hat die Verbreitung von Fliesen stark zugenommen; sie werden heutzutage überwiegend in hochautomatisierten Fabriken hergestellt.

Zur Dekoration von keramischen Fliesen werden Glasuren verwendet. In modernen Formen der Dekoration kommen unter anderem Digitaldruckverfahren zum Einsatz. Diese sind ähnlich wie in der graphischen Industrie, insbesondere können leicht modifizierte Tintenstrahldrucker eingesetzt werden, um definierte Muster auf die Oberfläche zu drucken. Hierbei ist es das Ziel - wie generell im Digitaldruck - eine möglichst originalgetreue Wiedergabe auf der Platte zu erzielen.

EP 1 270 241 A2 beschreibt ein Verfahren, bei dem eine glasierte Oberfläche bedruckt wird. Als Farben werden Metallsalze verwendet. Bevorzugt ist die flüssige Glasur, die aufgetragen wird, getrocknet, bevor eine metallsalzhaltige Flüssigkeit aufgetragen wird.

US 2010/0129542 beschreibt ein Verfahren zum Beschichten eines keramischen Substrats, bei dem ein Partikelfluid und ein Pigmentfluid nacheinander abwechselnd aufgetragen werden. Durch die Verwendung von zwei verschiedenen Fluiden werden Probleme mit der Sedimentation vermieden.

EP 0 960 873 A1 betrifft ein Verfahren zur Dekoration einer keramischen Fliese, bei dem Metallsalze zur Anwendung kommen.

DE 10 2007 008 443 A1 beschreibt ein Verfahren zum Dekorieren von Keramikartikeln, wobei Pigmente sandwichartig zwischen Glas-Frit-Schichten eingeschlossen werden.

Aufgabe der vorliegenden Erfindung war es, ein alternatives Dekorationsverfahren für keramische Fliesen bereitzustellen.

Gelöst wird die Aufgabe durch ein Verfahren zur Dekoration einer keramischen Fliese umfassend folgende Schritte:
- Bereitstellen eines keramischen Fliesenkörpers
- Auftragen einer wässrigen Glasur
- Aufbringen einer wässrigen Tinte enthaltend Farbpigmente auf die noch nicht getrocknete Glasur mittels Digitaldruck
- Brennen zu einer keramischen Fliese
oder durch ein Verfahren umfassend folgende Schritte:
- Bereitstellen eines keramischen Fliesenkörpers
- Auftragen einer pulverförmigen Glasur
- Aufbringen einer wässrigen Tinte enthaltend Farbpigmente auf die pulverförmige Glasur mittels Digitaldruck
- Brennen zu einer keramischen Fliese.

Im Gegensatz zu sonst üblichen Verfahren in der Dekoration keramischer Fliesen wird gerade akzeptiert, dass das Verfahren keine 100%ig identisch reproduzierbaren Ergebnisse gibt, sondern die Produkte unterschiedliche, variable Dekorationen erhalten.

In einer Variante des Verfahrens wird auf den keramischen Fliesenkörper eine wässrige Glasur aufgetragen. Dieser Auftrag erfolgt typischerweise durch Aufgießen. Bevor diese Glasur trocknet, wird eine wässrige Tinte aufgebracht. Es folgt eine Vermischung der wässrigen Glasur und der wässrigen Tinte zu einem variablen Muster. Anschließend erfolgt das Brennen zu einer keramischen Fliese.

Durch den Auftrag der wässrigen Glasur entsteht eine Glasurschicht, beispielsweise in einer Stärke von ca. 0,3 bis 1,2 mm, die dann durch den Digitaldruck weitere 0,003 bis 0,01 mm erhält. Die relativ große Schichtdicke führt dazu, dass die Glasurschicht lange für eine Vermischung mit der wässrigen Tinte bereit bleibt.

Alternativ kann statt der wässrigen Glasur eine pulverförmige Glasur aufgetragen werden. Beim Aufbringen von Wasser oder einer wässrigen Tinte löst sich die pulverförmige Glasur an. Es kommt ebenfalls zu einer Vermischung der Glasur und der Tinte in nicht exakt vorherbestimmter Form.

Das Aufstreuen erfolgt in einer Menge, dass die Glasurschicht bevorzugt in einem Dickebereich von 0,3 bis 1,2 mm liegen kann.

Erfindungsgemäß wird gerade ausgenutzt, dass sich Glasur und Tinte miteinander vermischen, um Variationen des Fliesendesigns zu erhalten.

"Fliesenkörper" im Sinne dieser Anmeldung umfasst Steingut, Steinzeug und Feinsteinzeug.

"Glasuren" sind Oberflächenveredlung von Keramikoberflächen, die eine glasartige geschlossene Oberflächenschicht bilden. Typische Inhaltsstoffe sind Kieselsäure, Alkali- und Erdalkali-Oxide, z.B. Bariumoxid, Tonminerale, Aluminium-, Zinn-, Zink-, Boroxide bzw. -Silikate.

Als "Tinte" werden wässrige Suspensionen von Farbpigmenten in Wasser mit organischen Stellmitteln bezeichnet.

Erfindungsgemäß erfolgt der Auftrag der wässrigen Tinte mit einem Digitaldruck. Solche Digitaldruckverfahren sind auch bisher zur Fliesendekoration schon verwendet worden. Dabei kann der Digitaldruck auf Basis einer digitalen Bildvorlage erfolgen. Es sind aber prinzipiell auch Steuerungen der Bildvorlage durch Töne oder geometrische Muster denkbar. Der Digitaldruck wird bevorzugt als Jet-Druck durchgeführt.

Im Digitaldruck werden typischerweise besonders dünne Schichten aufgetragen, so dass Schichtdicken, beispielsweise im Bereich von 0,003 bis 0,01 mm entstehen.

Die wässrige Tinte weist in einer bevorzugten Ausführungsform eine Oberflächenspannung zwischen 40 und 60 mN/m auf gemessen nach der Plattenmethode nach Wilhelmy mit einem Krüss Tensiometer K100.

Die Viskosität der wässrigen Tinte liegt bevorzugt im Bereich von 10 bis 50 mPa·s gemessen nach Brookfield Standard LVT mit Spindel LV-1 bis 60 rpm.

Eine bevorzugte Zusammensetzung der wässrigen Tinte umfasst
- 0 bis 50 Gew.-% Farbpigmente
- 30 bis 60 Gew.-% Wasser
- 20 bis 40 Gew.-% organische Stellmittel.

Bevorzugte Farbpigmente sind insbesondere solche die ausgewählt werden aus anorganischen Pigmenten, Spinellen, Einschlusspigmenten, z.B. Zinnoxiden, Zirkonoxiden, Chromoxiden, Manganoxiden, Eisenoxiden, Zirkonsilikaten, Titanoxiden, Aluminiumoxiden, Zinkoxiden, Kobaltverbindungen und Mischungen davon.

Erfindungsgemäß werden also keine Metallsalze, sondern Farbpigmente eingesetzt. Im Gegensatz zu Lösungen von Metallsalzen dringen die erfindungsgemäß eingesetzten Farbpigmente nicht in die poröse Oberfläche ein und gehen dort für die Farbwirkung verloren.

Für eine wässrige Glasur ist eine Zusammensetzung der folgenden Art geeignet:
- 60 bis 90 Gew.-% mineralische Bestandteile und Farbpigmente
- 10 bis 40 Gew.-% Wasser
- 0,2 bis 5 Gew.-% organische Binde- und Stellmittel.

Die Glasur kann Farbpigmente enthalten, dies ist aber nicht zwangsläufig erforderlich. Die Glasur kann auch farblos/transparent sein.

Als mineralische Bestandteile sind insbesondere Kieselsäuren, Alkalioxide, Zinn-, Zink-, Titanoxide, Erdalkalioxide wie Bariumoxid, Alumosilikaten, Aluminiumoxiden und Mischungen hiervon geeignet.

Für eine pulverförmige Glasur sind folgende Bestandteile geeignet:
- 90 bis 99,8 Gew.-% mineralische Bestandteile und Farbpigmente
- 0 bis 0,5 Gew.-% Wasser
- 0,2 bis 10 Gew.-% organische Binde- und Stellmittel.

In einer Ausführungsform erfolgt vor dem Auftragen der wässrigen oder pulverförmigen Glasur das Auftragen einer Engobe. Im Gegensatz zu Glasuren bilden Engoben keine Schutzschichten auf der Keramik.

Als organische Bindemittel kommen insbesondere Polysaccharid-Derivate in Frage, wie Cellulose sowie Polyphosphate.

Als organische Stellmittel werden insbesondere Ethanol, Isopropanol und Mischungen verwendet.

Die erfindungsgemäß eingesetzte wässrige Tinte kann darüber hinaus mineralische Bestandteile erhalten, so dass beim Brennen ebenfalls eine glasartige geschlossene Oberflächenschicht gebildet werden kann.

In einer Ausführungsform der Erfindung enthält die Glasur keine Farbpigmente. Wird die Tinte in die Glasur gedruckt, verläuft sie und bildet dabei - je nach Druck - leicht verlaufende Motive, die von Fliese zu Fliese unterschiedlich sind.

Es ist auch möglich, dass die Glasur bereits Farbpigmente enthält. In diesem Fall verlaufen verschiedene Farben ineinander und geben ein reproduzierbares, aber von Fliese zu Fliese geringfügig unterschiedliches, weiches Übergangsbild. Es ist auch möglich, dass nicht nur eine Tinte, sondern mehrere Tinten nacheinander verdruckt werden.

Die Erfindung wird durch das nachfolgende Beispiel näher erläutert.

Eine wässrige Glasur mit 64 Gew.-% mineralischer Bestandteile, (0,9% Na₂O, 5,7% K₂O, 0,9% MgO, 9,4% CaO, 11,3% ZnO, 6,9% Al₂O₃, 8,5% B₂O₃, 47% SiO₂, 0,9% Fe₂O₃, 8,5% ZrO₂), 34 Gew.-% Wasser und 2 Gew.-% organische Binde- und Stellmittel (Natriumcarboxymethylcellulose und Natriumpolyphosphat) wird mit dem Gießbalken auf eine Biskuitfliese aufgetragen.

In noch nassem Zustand wird sie mit einem Digitaldrucker (DWD Flatjet) mit einer wässrigen Tinte bedruckt.

Als Druckbild wurde ein über Musik erzieltes Klangbild verwendet.

Die erste Tinte enthält 11,6 Gew.-% blaue Farbpigmente (Cobalt Silikat), 28,4 Gew.-% organische Binde- und Stellmittel (Polysaccharidderivate und Polymere in wässrigem Glykolgemisch) und 60 Gew.-% Wasser.

Die Oberflächenspannung der Tinte betrug 55,4 mN/m; die Viskosität war 38 mPa·s.

Das Litergewicht betrug 1,13 g/ml und die Partikelgröße bei D50 (Volumen) war 2,94 µm.

Eine zweite Tinte enthielt 12,2 Gew.-% braune Farbpigmente (Chrom Eisen Zink), 27,8 Gew.-% organische Binde- und Stellmittel (Polysaccharidderivate und Polymere in wässrigem Glykolgemisch) und 60 Gew.-% Wasser.

Die Oberflächenspannung der Tinte betrug 45,8 mN/m; die Viskosität war 36 mPa·s.

Das Litergewicht betrug 1,12g/ml und die Partikelgröße bei D50 (Volumen) war 3,41 µm.

Eine dritte Tinte enthielt 10,8 Gew.-% schwarze Farbpigmente (Chrom Cobalt Eisen Nickel Mangan), 29,2 Gew.-% organische Binde- und Stellmittel

(Polysaccharidderivate und Polymere in wässrigem Glykolgemisch) und 60 Gew.-% Wasser.

Die Oberflächenspannung der Tinte betrug 53,5 mN/m; die Viskosität war 38 mPa·s.

Das Litergewicht betrug 1,13 g/ml und die Partikelgröße bei D50 (Volumen) war 3,37 µm.

Durch das Mischen der wässrigen Systeme verschwimmen die Farben von Glasur und Tinte zu einem vielschichtigen Farbgemisch, das durch die Datei grob vorgegeben wird.

Die Fliese wurde getrocknet und anschließend gebrannt.

Wenn alle Parameter eingehalten werden ist der Effekt reproduzierbar, das Ergebnis variiert jedoch.

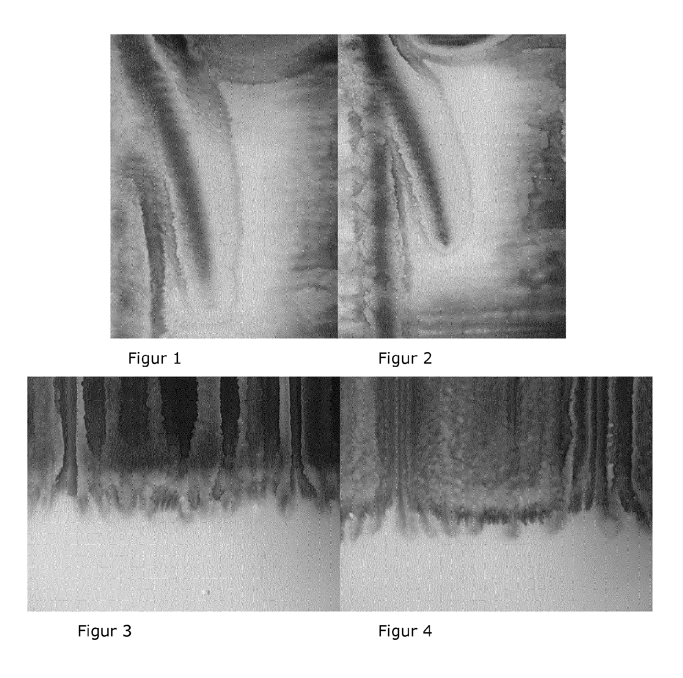

Figuren 1 und 2 zeigen zwei Fliesen, die erfindungsgemäß mit dem gleichen Muster mit den Tinten 1, 2 und 3 bedruckt wurden.
Figuren 3 und 4 zeigen zwei Fliesen, die erfindungsgemäß mit dem gleichen Muster mit der Tinte 3 bedruckt wurden.

## Patentansprüche

1. Verfahren zur Dekoration einer keramischen Fliese umfassend folgende Schritte:
- Bereitstellen eines keramischen Fliesenkörpers
- Auftragen einer wässrigen Glasur
- Aufbringen einer wässrigen Tinte enthaltend Farbpigmente auf die noch nicht getrocknete Glasur mittels Digitaldruck
- Brennen zu einer keramischen Fliese.

2. Verfahren zur Dekoration einer keramischen Fliese umfassend folgende Schritte:
- Bereitstellen eines keramischen Fliesenkörpers
- Auftragen einer pulverförmigen Glasur
- Aufbringen einer wässrigen Tinte enthaltend Farbpigmente auf die pulverförmige Glasur mittels Digitaldruck
- Brennen zu einer keramischen Fliese.

3. Verfahren nach Anspruch 1 oder 2, wobei die Schichtdicke der Glasur 0,3 bis 1,2 mm beträgt.

4. Verfahren nach Anspruch 3, wobei der Digitaldruck eine digitale Bildvorlage aufträgt, insbesondere wobei die Bildvorlage durch Töne oder geometrische Muster erzeugt wird.

5. Verfahren nach einem der Ansprüche 3 oder 4, wobei der Digitaldruck als Inkjetdruck erfolgt.

6. Verfahren nach einem der Ansprüche 1 bis 5, wobei die wässrige Tinte eine Oberflächenspannung zwischen 40 und 60 mN/m aufweist.

7. Verfahren nach einem der Ansprüche 1 bis 5, wobei die wässrige Tinte eine Viskosität von 10 bis 50 mPa·s aufweist.

8. Verfahren nach einem der Ansprüche 1 bis 7, wobei die wässrige Tinte zumindest folgende Bestandteile aufweist:
- 0 bis 50 Gew.-% Farbpigmente
- 30 bis 60 Gew.-% Wasser
- 20 bis 40 Gew.-% organische Stellmittel.

9. Verfahren nach einem der Ansprüche 1 bis 8, wobei die wässrige Glasur zumindest folgende Bestandteile aufweist:
- 60 bis 90 Gew.-% mineralische Bestandteile und Farbpigmente
- 10 bis 40 Gew.-% Wasser
- 0,2 bis 5 Gew.-% organische Binde- und Stellmittel.

10. Verfahren nach einem der Ansprüche 2 bis 9, wobei die pulverförmige Glasur zumindest folgende Bestandteile teilweist:
- 90 bis 99,8 Gew.-% mineralische Bestandteile und Farbpigmente
- 0 bis 0,5 Gew.-% Wasser
- 0,2 bis 10 Gew.-% organische Binde- und Stellmittel.

11. Verfahren nach Anspruch 9, wobei die mineralischen Bestandteile ausgewählt werden aus Kieselsäuren, Alkalioxiden, Erdalkalioxiden, wie Bariumoxid, Tonminerale, Aluminium-, Zinn-, Zink-, Boroxide bzw.-Silikate, Alumosilikaten, Aluminiumoxiden und Mischungen hiervon.

12. Verfahren nach einem der Ansprüche 8 bis 10, wobei die Farbpigmente ausgewählt werden aus anorganischen Pigmenten, Spinellen, Einschlusspigmenten, wie Zinnoxiden, Zirkonoxiden, Chromoxiden, Manganoxiden, Eisenoxiden, Zirkonsilikaten, Titanoxide, Aluminiumoxide, Zinkoxide, Kobaltverbindungen und Mischungen davon.

13. Verfahren nach einem der Ansprüche 1 bis 11, wobei vor dem Auftragen der wässrigen oder pulverförmigen Glasur das Auftragen einer Engobe erfolgt.

14. Keramische Fliese erhältlich durch ein Verfahren nach mindestens einem der Ansprüche 1 bis 13.
